# FASCICULE DE BREVET EUROPEEN

(11) **EP 4 664 056 B1**
(45) Date de publication et mention de la délivrance du brevet: **23.09.2026**
(21) Numéro de dépôt: 25181555.1
(22) Date de dépôt: 09.06.2025
(51) Int. Cl.: F41A 25/02

(54) **ENSEMBLE CULASSE POUR ARME ET PROCÉDÉ DE CONTRÔLE DU NIVEAU DE FLUIDE DANS LE SYSTÈME AMORTISSEUR DE RECUL D'UN TEL ENSEMBLE CULASSE**
VERSCHLUSSANORDNUNG FÜR EINE WAFFE UND VERFAHREN ZUR STEUERUNG DES FLÜSSIGKEITSPEGELS IN DEM RÜCKSTOSSDÄMPFERSYSTEM EINER SOLCHEN VERSCHLUSSANORDNUNG
BREECH ASSEMBLY FOR A WEAPON AND METHOD FOR CONTROLLING THE FLUID LEVEL IN THE RECOIL DAMPENING SYSTEM OF SUCH A BREECH ASSEMBLY

(30) Priorité: 12.06.2024 FR 2406156
(43) Date de publication de la demande: 17.12.2025
(73) Titulaire: KNDS France, 78034 Versailles Cedex (FR)
(72) Inventeur: HUMMEL, Boris, 18023 Bourges (FR); HUBSCHWERLEN, Frédéric, 18023 Bourges (FR); BALBO, Patrick, 18023 Bourges (FR); SABOURIN, Pascal, 18023 Bourges (FR); LATROYE, Antoine, 18023 Bourges (FR)
(74) Mandataire: Cabinet Chaillot

(56) Documents cités:
- GB-A- 130 049
- US-A- 1 318 605

## Description

Le domaine technique de l'invention est celui des armes d'artillerie, notamment de gros calibre.

La présente invention concerne en particulier le parage d'un système amortisseur de recul d'une telle arme, et porte sur un ensemble culasse pour arme comprenant un système amortisseur de recul et une jauge de parage, ainsi que sur un procédé de contrôle du parage d'un tel système amortisseur de recul. Un tel ensemble et connu de GB 130 049 A.

Sur de nombreuses armes d'artillerie, le berceau est relié au manchon de culasse par un système amortisseur de recul comprenant un ou plusieurs liens élastiques, freins ou récupérateurs qui comprennent un corps solidaire du berceau et une tige coulissant dans le corps et fixée au manchon de culasse. Le parage du système amortisseur consiste à vérifier que la quantité de fluide et/ou la pression dans ce système est nominale.

Il est connu d'effectuer cette opération de contrôle par contrôle visuel du positionnement d'une jauge relativement à l'extrémité du système amortisseur. La visualisation de la position de cette jauge se fait généralement par l'usage de repères colorés ou gradués disposés le long de cette jauge.

Cependant, à ce jour, la visualisation de la position de la jauge nécessite d'avoir accès aux flancs de l'arme.

L'invention vise à proposer une implantation de la jauge de parage dans une arme intégrée dans une tourelle téléopérée sans aucun accès sur les flancs de l'arme.

La solution repose sur le fait de permettre le remplissage et la visualisation de la jauge de parage depuis l'arrière du manchon de culasse.

L'invention a ainsi pour objet un ensemble culasse pour arme comprenant :
- un manchon de culasse ayant une face arrière ;
- un système amortisseur de recul relié au manchon de culasse ;
- une soupape de remplissage en fluide du système amortisseur ; et
- une jauge de parage reliée au système amortisseur de recul, la jauge de parage comportant un indicateur de niveau de fluide monté mobile en translation axiale par rapport au manchon de culasse, le niveau de fluide dans le système amortisseur de recul étant indiqué par la position axiale de l'indicateur,
tel que le manchon de culasse comprend un logement interne axial débouchant par une ouverture au niveau de la face arrière, le système amortisseur de recul, la soupape de remplissage et la jauge de parage étant reçus dans le logement interne, l'ouverture débouchant dans un moyen de visualisation de la position axiale de l'indicateur prévu dans le logement interne et permettant le passage de l'indicateur et de la soupape de remplissage, l'indicateur étant mobile entre une position enfoncée, en avant du moyen de visualisation, et une position en saillie maximale, dans laquelle l'indicateur fait saillie dans le moyen de visualisation.

Avec un tel ensemble culasse, le remplissage et la visualisation de la jauge de parage se fait depuis l'arrière du manchon de culasse, ce qui permet l'intégration de l'arme comportant un tel ensemble culasse dans une tourelle téléopérée sans aucun accès depuis les flancs de l'arme. En d'autres termes, la présente invention permet d'adapter la lecture du parage d'un système amortisseur de recul à des contraintes de lisibilité imposées par une arme dont l'architecture ne permet pas d'accéder aux flancs de l'arme.

Le système amortisseur de recul peut être au moins un élément tel qu'un frein, un récupérateur ou un lien élastique.

Dans un mode de réalisation particulier, le moyen de visualisation est un évidement traversant tronconique agencé entre l'ouverture et une section cylindrique du logement interne et coaxial à l'axe longitudinal de la section cylindrique, l'ouverture étant une ouverture circulaire et l'évidement ayant une extrémité de petit diamètre côté section cylindrique et une extrémité de grand diamètre côté ouverture.

En variante, l'évidement pourrait présenter une autre forme évasée vers son extrémité côté face arrière du manchon de culasse.

De préférence, l'évidement comporte une surface interne réfléchissante rapportée ou usinée dans la masse du manchon de culasse. Une telle surface réfléchissante est apte à réfléchir la lumière, à la manière d'un miroir, et donc de visualiser la portion de l'indicateur et de la soupape de remplissage s'étendant à travers l'évidement.

Avantageusement, la surface interne réfléchissante couvre un domaine angulaire de 360 degrés autour de l'axe longitudinal de l'évidement.

En variante, la surface interne réfléchissante pourra couvrir un secteur angulaire donné inférieur à 360 degrés.

De préférence, l'évidement présente un angle de conicité compris entre 10 et 160 degrés, et de façon davantage préférée entre 30 et 120 degrés.

De préférence, l'indicateur se présente sous la forme d'une tige indicatrice comportant des éléments graphiques disposés le long de ladite tige, dont au moins un premier élément graphique associé à un système amortisseur de recul déparé, un deuxième élément graphique associé à un système paré et un troisième élément graphique associé à un système trop paré.

Avantageusement, les éléments graphiques sont des zones colorées d'une couleur différente ou espacées les unes des autres.

Par exemple, les zones colorées peuvent comprendre une première zone colorée de couleur rouge, une deuxième zone colorée de couleur verte et une troisième zone colorée de couleur blanche.

En variante, les éléments graphiques pourraient être des motifs ou des graduations.

De préférence, l'orifice de remplissage de la soupape est coaxial à l'axe longitudinal de l'évidement et orienté vers l'ouverture.

De préférence, l'ouverture est située au niveau du bord supérieur de la paroi arrière de l'une des deux joues latérales du manchon de culasse.

L'invention a également pour objet un procédé de contrôle, par un opérateur, du niveau de fluide dans le système amortisseur de recul d'un ensemble culasse tel que défini ci-dessus, caractérisé par le fait qu'il comprend les étapes suivantes :
- l'opérateur se positionne au niveau de l'ouverture dans la face arrière du manchon de culasse ;
- l'opérateur détecte visuellement l'indicateur de la jauge de parage à l'aide du moyen de visualisation, le cas échant par réflexion sur la surface interne réfléchissante ; et
- en déduire la position de l'indicateur et donc l'état déparé, paré ou trop paré du système à l'aide d'un code couleurs.

De préférence, dans le cas où il est déduit que le système est déparé, le procédé comprend en outre une étape consistant à ouvrir la soupape de remplissage et à procéder au remplissage en fluide du système depuis l'orifice de remplissage jusqu'à ce que l'état paré soit atteint.

L'invention sera mieux comprise à la lecture de la description suivante du mode de réalisation préféré, description faite à la lumière des dessins annexés, dessins dans lesquels :
[Fig. **1****]** est une vue en perspective partielle de la face arrière d'un manchon de culasse de l'ensemble culasse selon l'invention ;
[Fig. 2] est une vue de côté en coupe longitudinale selon l'axe longitudinal du logement interne de l'ensemble culasse, montrant l'indicateur ainsi que le positionnement de l'œil pour le contrôle visuel de l'indicateur ;
[Fig. 3A] montre une vue de côté en coupe longitudinale au niveau du moyen de visualisation, ainsi que le visuel obtenu, lorsque le système est déparé ;
[Fig. 3B] montre une autre vue de côté en coupe longitudinale au niveau du moyen de visualisation, ainsi qu'un visuel obtenu, lorsque le système est déparé ;
[Fig. 3C] montre une vue de côté en coupe longitudinale au niveau du moyen de visualisation, ainsi qu'un visuel obtenu, lorsque le système est paré ; et
[Fig. 3D] montre une vue de côté en coupe longitudinale au niveau du moyen de visualisation, ainsi qu'un visuel obtenu, lorsque le système est trop paré.

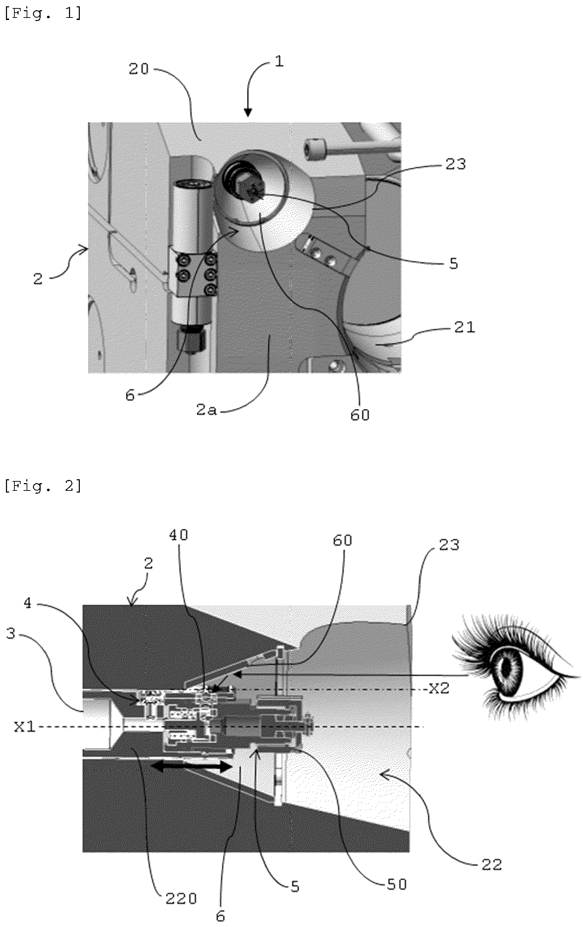

Si l'on se réfère tout d'abord aux Figures 1 et 2, on peut voir que l'ensemble culasse 1 selon la présente invention est destiné à équiper une arme dont l'intégration ne permet pas d'accéder aux flancs de l'arme, mais seulement à l'arrière de l'arme.

De manière globale, l'ensemble culasse 1 comprend un manchon de culasse 2, un système amortisseur de recul 3, une jauge de parage 4, une soupape de remplissage 5 et un moyen de visualisation 6. Sur les Figures, la représentation de l'ensemble culasse 1 a été volontairement limitée à la partie arrière de celui-ci.

Le manchon de culasse 2 comprend, de manière connue, deux joues 20 entre lesquelles est mobile un coin de culasse 21. Le manchon de culasse 2 comprend un logement interne 22 s'étendant depuis une ouverture 23 sur la face arrière 2a du manchon de culasse 2, vers l'intérieur de celui-ci. Ce logement interne 22 s'étend selon un axe longitudinal X1 parallèle à l'axe longitudinal du tube d'arme (non représenté). L'ouverture 23 est ici pratiquée au niveau du bord supérieur de l'une des deux joues 20 et au niveau du coin extérieur de cette joue 20. L'ouverture 23 est une ouverture de section circulaire. Le logement interne 22 est dimensionné pour recevoir, à coulissement, la jauge de parage 4 reliée au système amortisseur 3 et la soupape de remplissage 5 du système amortisseur 3.

Le système amortisseur de recul 3 est connu en soi. Ce système amortisseur de recul 3 peut être au moins un élément tel qu'un frein, un récupérateur ou un lien élastique.

La jauge de parage 4 est reliée, de manière connue, au système amortisseur de recul 3. La jauge de parage 4 comprend un indicateur 40 de niveau de fluide sous la forme d'une tige indicatrice 40 montée mobile en translation axiale par rapport au manchon de culasse 2. En d'autres termes, la tige indicatrice 40 est reliée au système amortisseur 3 et est montée mobile dans le logement interne 22 selon un axe X2 parallèle à l'axe X1 du logement interne 22. Plus précisément, la tige indicatrice 40 est mobile en translation, de manière progressive et en fonction du niveau de fluide dans le système amortisseur 3, entre une position enfoncée, éloignée de l'ouverture 23, et une position en saillie maximale, rapprochée de l'ouverture 23. La direction de translation de la tige indicatrice 40 est une direction axiale, parallèle à l'axe longitudinal X1 du logement interne 22, comme le montre la double flèche sur la Figure **2****.** La tige indicatrice 40 comporte plusieurs repères ou zones colorées 41a, 41b, 41c disposées le long de la tige 40 à partir de l'extrémité libre de la tige 40 côté ouverture 23. Dans le mode de réalisation représenté, la tige 40 comporte trois zones colorées 41a, 41b, 41c, par exemple, une zone rouge 41a côté extrémité libre, suivi de deux zones vertes 41b, 41c, les trois zones colorées 41a, 41b, 41c étant légèrement espacées par une zone non colorée.

La soupape de remplissage 5 est accessible depuis la face arrière 2a du manchon de culasse **2.** Elle est fermée par un bouchon à vis 50, qu'il convient simplement de dévisser depuis l'arrière pour permettre le remplissage à travers l'orifice de remplissage de la soupape **5.** Le bouchon 50 présente une section hexagonale et son axe longitudinal est coaxial à l'axe longitudinal X1 du logement interne 22. Ainsi, la soupape 5 et son bouchon 50 sont montés mobiles en translation axiale, selon l'axe longitudinal X1 du logement interne 22.

Le moyen de visualisation 6 est agencé et configuré pour permettre la visualisation de la tige indicatrice 40 depuis la face arrière 2a du manchon de culasse 2. Ce moyen de visualisation 6 est un évidement 6 traversant de forme évasée s'étendant depuis l'ouverture 23 et communiquant avec le logement interne 22. L'évidement 6 est évasé vers l'ouverture 23. L'axe longitudinal central de l'évidement 6 est coaxial à l'axe de l'ouverture 23 et à l'axe X1 du logement interne 22. Dans le mode de réalisation représenté, l'évidement 6 est un évidement tronconique débouchant d'une part à l'extérieur, à travers l'ouverture 23, et d'autre part dans une section cylindrique 220 du logement interne 22. Le diamètre de la section cylindrique 220 est inférieur au diamètre de l'ouverture 23, et donc le diamètre de l'évidement 6 à son extrémité côté section cylindrique 220 est inférieur à son diamètre côté ouverture 23, de sorte que l'évidement 6 présente une conicité suffisante pour permettre un accès visuel direct à la tige indicatrice 40. L'évidement 6 tronconique peut avoir plusieurs portions tronconiques successives avec différents angles de conicité, par exemple une première portion tronconique débouchant dans la section cylindrique 220 et une seconde portion tronconique débouchant vers l'extérieur.

Afin de faciliter la visualisation de la tige indicatrice 40, l'évidement 6 présente une surface interne réfléchissante 60. Cette surface réfléchissante 60 peut être due à un état de surface résultant d'un usinage dans la masse du manchon de culasse 2 ou une surface réfléchissante rapportée, par exemple collée, fixée ou ajustée par concordance de forme dans l'évidement **6.** Par exemple, la surface réfléchissante 60 peut être une surface en matériau métallique présentant un état de surface soigné et/ou poli, avec ou sans traitement de surface, une surface en matériau polymère avec un dépôt métallique de surface présentant un état de surface soigné et/ou poli, ou toute autre surface apte à réfléchir la lumière et à produire un effet miroir.

La surface réfléchissante 60 s'étend sur une certaine longueur depuis l'extrémité de petit diamètre de l'évidement 6. Elle peut s'étendre de l'extrémité de petit diamètre à l'ouverture 23 ou à une zone proche de l'ouverture 23. De même, la surface réfléchissante 60 peut couvrir une plage angulaire de 360 degrés, à savoir la totalité de la paroi latérale de l'évidement 6, ou couvrir un secteur angulaire inférieur à 360 degrés. Dans le cas d'un secteur angulaire inférieur à 360 degrés, ce secteur angulaire couvre au moins partiellement la tige indicatrice 40.

En utilisation, lorsque l'on souhaite contrôler le parage du système amortisseur 3 d'une arme équipée de l'ensemble culasse 1 selon la présente invention, il suffit de venir regarder au niveau de l'ouverture 23 dans la face arrière 2a du manchon de culasse 2, comme indiqué sur la Figure 2. La ou les zones colorées 41a, 41b, 41c de la partie de la tige indicatrice 40 qui fait saillie dans l'évidement 6 sont reflétées, par effet miroir, sur la surface interne réfléchissante 60 de l'évidement 6. Ces zones colorées 41a-41c peuvent donc être détectées visuellement en observant directement la surface réfléchissante 60 de l'évidement 6. En fonction du visuel obtenu, c'est-à-dire du motif coloré formé par le reflet de la ou des zones colorées 41a-41c, il est alors possible de déduire la position de la tige indicatrice 40 et donc le niveau de remplissage du système amortisseur 3. En effet, chaque visuel est un code couleur associé à une position de l'indicateur 40, ladite position étant associée à un état déparé, paré ou trop paré du système amortisseur 3.

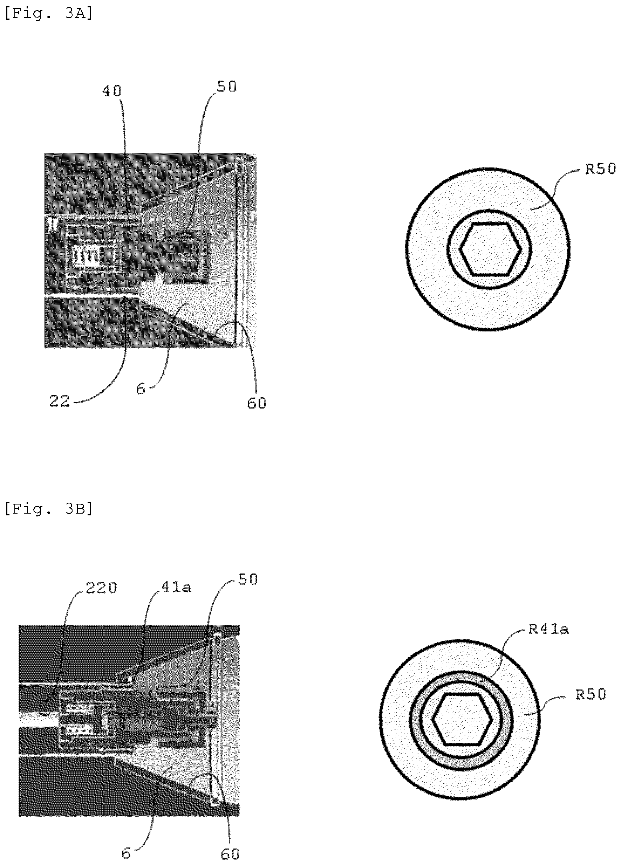

Sur la Figure 3A, le visuel obtenu (à droite sur la Figure 3A) montre le reflet R50 uniquement de la couleur associée à la soupape de remplissage 5. Ceci implique que seule la soupape de remplissage 5 fait saillie dans l'évidement 6 (à gauche sur la Figure 3A). La tige indicatrice 40 se trouve en avant de l'évidement 6, dans la section cylindrique 220 du logement interne 22, dans une position dite position enfoncée. Une telle position enfoncée de la tige indicatrice 40 correspond à un état déparé du système amortisseur 3. En présence d'un tel état déparé, le tir est interdit. Il convient dans ce cas, de procéder au remplissage complet du système amortisseur 3 via l'orifice de remplissage après dévissage du bouchon 50 depuis la face arrière 2a.

Sur la Figure 3B, le visuel obtenu montre le reflet R50 de la couleur associée à la soupape de remplissage 5 ainsi que le reflet R41a de la première zone colorée 41a de la tige indicatrice 40. Ceci implique que la soupape de remplissage 5 et la première zone colorée 41a font saillie dans l'évidement 6. La tige indicatrice 40 s'est donc déplacée en translation axiale de sa position enfoncée vers une première position en saillie dans l'évidement **6.** Une telle première position en saillie de la tige indicatrice 40 correspond également à un état déparé du système amortisseur 3. La couleur de la première zone colorée peut être le rouge.

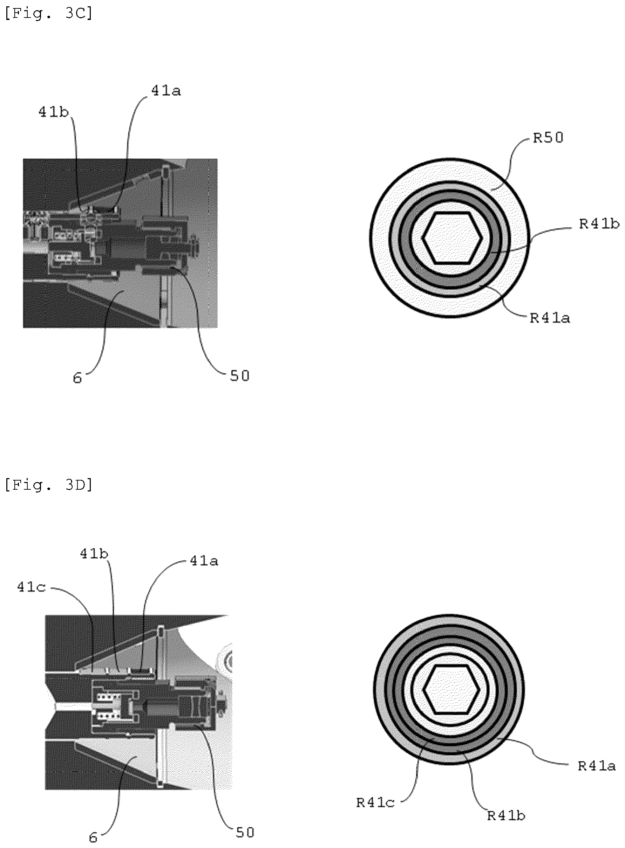

Sur la Figure 3C, le visuel obtenu montre le reflet R50 de la couleur associée à la soupape de remplissage 5 ainsi que les reflets R41a et R41b des première 41a et deuxième 41b zones colorées de la tige indicatrice 40. Ceci implique que la soupape de remplissage 5, la première zone colorée 41a et la deuxième zone colorée 41b font saillie dans l'évidement 6. La tige indicatrice 40 s'est donc déplacée en translation axiale de sa première position en saillie vers une deuxième position en saillie dans l'évidement 6. Une telle deuxième position en saillie de la tige indicatrice 40 correspond un état paré du système amortisseur 3. La couleur de la deuxième zone colorée 41b peut être le vert. La détection de l'état paré peut être réalisée aisément et rapidement dès la simple détection de deux zones colorées de couleurs distinctes associées à la tige indicatrice 40. Un tel état paré autorise le tir.

Sur la Figure 3D, le visuel obtenu montre le reflet R50 de la couleur associée au bouchon 50 de la soupape de remplissage 5 ainsi que les reflets R41a, R41b et R41c des première 41a, deuxième 41b et troisième 41c zones colorées de la tige indicatrice 40. Ceci implique que le bouchon 50 de la soupape de remplissage 5, la première zone colorée 41a, la deuxième zone colorée 41b et la troisième zone colorée 41c font saillie dans l'évidement **6.** La tige indicatrice 40 s'est donc déplacée en translation axiale de sa deuxième position en saillie vers une troisième position en saillie, dite position en saillie maximale, dans l'évidement **6.** Une telle position en saillie maximale de la tige indicatrice 40 correspond un état trop paré du système amortisseur 3. La couleur de la troisième zone colorée 41c peut être le vert ou toute autre couleur telle que la couleur d'une zone non peinte. La détection de l'état trop paré peut être réalisée aisément et rapidement dès la simple détection de trois zones colorées ou plus associées à la tige indicatrice 40. Un tel état trop paré empêche le tir.

Il est bien entendu que les modes de réalisation particuliers qui viennent d'être décrits ont été donnés à titre indicatif et non limitatif, et que des modifications peuvent être apportées sans que l'on s'écarte pour autant de la présente invention.

Par exemple, le code couleur des zones colorées peut être n'importe quel code couleur approprié. De même, les zones colorées le long de la tige indicatrice peuvent être remplacées par tout élément graphique approprié apte à être distingué visuellement. Concernant le moyen de visualisation, l'évidement peut présenter toute forme évasée permettant un accès visuel à la surface interne de l'évidement, sans limitation à une forme tronconique.

## Revendications

1. Ensemble culasse (1) pour arme comprenant :
- un manchon de culasse (2) ayant une face arrière (2a) ;
- un système amortisseur de recul (3) relié au manchon de culasse (2) ;
- une soupape (5) de remplissage en fluide du système amortisseur (3) ; et
- une jauge de parage (4) reliée au système amortisseur de recul (3), la jauge de parage (4) comportant un indicateur (40) de niveau de fluide monté mobile en translation axiale par rapport au manchon de culasse (2), le niveau de fluide dans le système amortisseur de recul (3) étant indiqué par la position axiale de l'indicateur (40), tel
que le manchon de culasse (2) comprend un logement interne (22) axial débouchant par une ouverture (23) au niveau de la face arrière (2a), le système amortisseur de recul (3), la soupape (5) de remplissage et la jauge de parage (4) étant reçus dans le logement interne (22), l'ouverture (23) débouchant dans un moyen de visualisation (6) de la position axiale de l'indicateur (40) prévu dans le logement interne (22) et permettant le passage de l'indicateur (40) et de la soupape (5) de remplissage, l'indicateur (40) étant mobile entre une position enfoncée, en avant du moyen de visualisation (6), et une position en saillie maximale, dans laquelle l'indicateur (40) fait saillie dans le moyen de visualisation (6).

2. Ensemble culasse (1) selon la revendication 1, **caractérisé par le fait que** le moyen de visualisation (6) est un évidement (6) traversant tronconique agencé entre l'ouverture (23) et une section cylindrique (220) du logement interne (22) et coaxial à l'axe longitudinal (X1) de la section cylindrique (220), l'ouverture (23) étant une ouverture circulaire et l'évidement (6) ayant une extrémité de petit diamètre côté section cylindrique (220) et une extrémité de grand diamètre côté ouverture (23).

3. Ensemble culasse (1) selon la revendication 2, **caractérisé par le fait que** l'évidement (6) comporte une surface interne réfléchissante (60) rapportée ou usinée dans la masse du manchon de culasse (2).

4. Ensemble culasse (1) selon la revendication 3, **caractérisé par le fait que** la surface interne réfléchissante (60) couvre un domaine angulaire de 360 degrés autour de l'axe longitudinal (X1) de l'évidement (6).

5. Ensemble culasse (1) selon l'une quelconque des revendications 2 à 4, **caractérisé par le fait que** l'évidement (6) présente un angle de conicité compris entre 10 et 160 degrés, et de façon davantage préférée entre 30 et 120 degrés.

6. Ensemble culasse (1) selon l'une quelconque des revendications 1 à 5, **caractérisé par le fait que** l'indicateur (40) se présente sous la forme d'une tige indicatrice (40) comportant des éléments graphiques (41a-41c) disposés le long de ladite tige (40), dont au moins un premier élément graphique (41a) associé à un système amortisseur de recul (3) déparé, un deuxième élément graphique (41b) associé à un système (3) paré et un troisième élément graphique (41c) associé à un système (3) trop paré.

7. Ensemble culasse (1) selon la revendication 6, **caractérisé par le fait que** les éléments graphiques (41a-41c) sont des zones colorées d'une couleur différente ou espacées les unes des autres.

8. Ensemble culasse (1) selon l'une quelconque des revendications 2 à 5 ou l'une quelconque des revendications 6 et 7 prise en dépendance de la revendication 2, **caractérisé par le fait que** l'orifice de remplissage de la soupape (5) est coaxial à l'axe longitudinal (X1) de l'évidement (6) et orienté vers l'ouverture (23).

9. Procédé de contrôle, par un opérateur, du niveau de fluide dans le système amortisseur de recul (3) d'un ensemble culasse (1) selon l'une des revendications 1 à 8, **caractérisé par le fait qu'**il comprend les étapes suivantes :
- l'opérateur se positionne au niveau de l'ouverture (23) dans la face arrière (2a) du manchon de culasse (2) ;
- l'opérateur détecte visuellement l'indicateur (40) de la jauge de parage (4) à l'aide du moyen de visualisation (6), le cas échant par réflexion sur la surface interne réfléchissante (60) ; et
- en déduire la position de l'indicateur (40) et donc l'état déparé, paré ou trop paré du système (3) à l'aide d'un code couleurs.

10. Procédé selon la revendication 9, **caractérisé par le fait que**, dans le cas où il est déduit que le système (3) est déparé, le procédé comprend en outre une étape consistant à ouvrir la soupape (5) de remplissage et à procéder au remplissage en fluide du système (3) depuis l'orifice de remplissage jusqu'à ce que l'état paré soit atteint.

## Patentansprüche

1. - Verschlussanordnung (1) für eine Waffe, umfassend:
- eine Verschlusshülse (2) mit einer rückseitigen Fläche (2a);
- ein mit der Verschlusshülse (2) verbundenes Rückstoßdämpfersystem (3);
- ein Ventil (5) zum Befüllen des Dämpfersystems (3) mit Fluid; und
- eine mit dem Rückstoßdämpfersystem (3) verbundene Parierungslehre (4), wobei die Parierungslehre (4) einen Fluidstandanzeiger (40) aufweist, der in Bezug auf die Verschlusshülse (2) in axialer Translation beweglich angebracht ist, wobei der Fluidstand in dem Rückstoßdämpfersystem (3) durch die axiale Position des Anzeigers (40) angezeigt wird,
wobei die Verschlusshülse (2) eine axiale innere Aufnahme (22) umfasst, die im Bereich der rückseitigen Fläche (2a) über eine Öffnung (23) mündet, wobei das Rückstoßdämpfersystem (3), das Befüllventil (5) und die Parierungslehre (4) in der inneren Aufnahme (22) aufgenommen sind, wobei die Öffnung (23) in ein Visualisierungsmittel (6) der axialen Position des Anzeigers (40) mündet, das in der inneren Aufnahme (22) vorgesehen ist und den Durchtritt des Anzeigers (40) und des Befüllventils (5) ermöglicht, wobei der Anzeiger (40) zwischen einer eingedrückten Position, vor dem Visualisierungsmittel (6), und einer Position maximalen Vorsprungs beweglich ist, in der der Anzeiger (40) in das Visualisierungsmittel (6) vorspringt.

2. - Verschlussanordnung (1) nach Anspruch 1, **dadurch gekennzeichnet, dass** das Visualisierungsmittel (6) eine kegelstumpfförmige durchgehende Ausnehmung (6) ist, die zwischen der Öffnung (23) und einem zylindrischen Abschnitt (220) der inneren Aufnahme (22) eingerichtet ist und koaxial zu der Längsachse (X1) des zylindrischen Abschnitts (220) verläuft, wobei die Öffnung (23) eine kreisförmige Öffnung ist und die Ausnehmung (6) ein Ende mit kleinem Durchmesser auf der Seite des zylindrischen Abschnitts (220) und ein Ende mit großem Durchmesser auf der Seite der Öffnung (23) aufweist.

3. - Verschlussanordnung (1) nach Anspruch 2, **dadurch gekennzeichnet, dass** die Ausnehmung (6) eine reflektierende innere Oberfläche (60) umfasst, die angesetzt oder in die Masse der Verschlusshülse (2) eingearbeitet ist.

4. - Verschlussanordnung (1) nach Anspruch 3, **dadurch gekennzeichnet, dass** die reflektierende innere Oberfläche (60) einen Winkelbereich von 360 Grad um die Längsachse (X1) der Ausnehmung (6) abdeckt.

5. - Verschlussanordnung (1) nach einem der Ansprüche 2 bis 4, **dadurch gekennzeichnet, dass** die Ausnehmung (6) einen Konizitätswinkel zwischen 10 und 160 Grad und noch bevorzugter zwischen 30 und 120 Grad aufweist.

6. - Verschlussanordnung (1) nach einem der Ansprüche 1 bis 5, **dadurch gekennzeichnet, dass** der Anzeiger (40) in Form eines Anzeigestabs (40) ausgebildet ist, der grafische Elemente (41a-41c) aufweist, die entlang des Stabs (40) angeordnet sind, von denen mindestens ein erstes grafisches Element (41a) einem unterparierten Rückstoßdämpfersystem (3), ein zweites grafisches Element (41b) einem parierten System (3) und ein drittes grafisches Element (41c) einem überparierten System (3) zugeordnet ist.

7. - Verschlussanordnung (1) nach Anspruch 6, **dadurch gekennzeichnet, dass** die grafischen Elemente (41a-41c) farbige Zonen unterschiedlicher Farbe sind oder voneinander beabstandet sind.

8. - Verschlussanordnung (1) nach einem der Ansprüche 2 bis 5 oder nach einem der Ansprüche 6 und 7 in Abhängigkeit von Anspruch 2, **dadurch gekennzeichnet, dass** die Befüllöffnung des Ventils (5) koaxial zu der Längsachse (X1) der Ausnehmung (6) ist und zur Öffnung (23) hin ausgerichtet ist.

9. - Verfahren zur Kontrolle, durch einen Bediener, des Fluidstands in dem Rückstoßdämpfersystem (3) einer Verschlussanordnung (1) nach einem der Ansprüche 1 bis 8, **dadurch gekennzeichnet, dass** es die folgenden Schritte umfasst:
- der Bediener positioniert sich im Bereich der Öffnung (23) in der rückseitigen Fläche (2a) der Verschlusshülse (2);
- der Bediener ermittelt den Anzeiger (40) der Parierungslehre (4) visuell mit Hilfe des Visualisierungsmittels (6), gegebenenfalls durch Reflexion an der reflektierenden inneren Oberfläche (60); und
- Ableiten daraus der Position des Anzeigers (40) und damit des unterparierten, parierten oder überparierten Zustand des Systems (3) mit Hilfe eines Farbcodes.

10. - Verfahren nach Anspruch 9, **dadurch gekennzeichnet, dass**, in dem Fall, dass abgeleitet wird, dass das System (3) unterpariert ist, das Verfahren ferner einen Schritt umfasst, der darin besteht, das Befüllventil (5) zu öffnen und das Befüllen des Systems (3) mit Fluid von der Befüllöffnung aus vorzunehmen, bis der parierte Zustand erreicht ist.

## Claims

1. - A breech assembly (1) for a gun, comprising:
- a breech ring (2) having a rear face (2a);
- a recoil damping system (3) connected to the breech ring (2);
- a fluid filling valve (5) for the damping system (3); and
- a level gauge (4) connected to the recoil damping system (3), the level gauge (4) comprising a fluid level indicator (40) mounted movable in axial translation relative to the breech ring (2), the fluid level in the recoil damping system (3) being indicated by the axial position of the indicator (40),
such that the breech ring (2) comprises an axial inner housing (22) opening out through an opening (23) at the rear face (2a), the recoil damping system (3), the filling valve (5) and the level gauge (4) are received in the inner housing (22), the opening (23) opens into a means (6) for viewing the axial position of the indicator (40), which is provided in the inner housing (22) and allows the passage of the indicator (40) and the filling valve (5), the indicator (40) being movable between a sunk position, which is forward of the viewing means (6), and a maximum protruding position, in which the indicator (40) protrudes into the viewing means (6).

2. - The breech assembly (1) according to claim 1, **characterized in that** the viewing means (6) is a frustoconical through recess (6) arranged between the opening (23) and a cylindrical portion (220) of the inner housing (22) and coaxial with the longitudinal axis (X1) of the cylindrical portion (220), the opening (23) being a circular opening and the recess (6) having a small-diameter end on the cylindrical portion (220) side and a large-diameter end on the opening (23) side.

3. - The breech assembly (1) according to claim 2, **characterized in that** the recess (6) has a reflective inner surface (60) added to or machined in the mass of the breech ring (2).

4. - The breech assembly (1) according to claim 3, **characterized in that** the inner reflective surface (60) covers an angular range of 360 degrees around the longitudinal axis (X1) of the recess (6).

5. - The breech assembly (1) according to any one of claims 2 to 4, **characterized in that** the recess (6) has a taper angle ranging between 10 and 160 degrees, and more preferably between 30 and 120 degrees.

6. - The breech assembly (1) according to any one of claims 1 to 5, **characterized in that** the indicator (40) is in the form of an indicator rod (40) comprising graphic elements (41a-41c) arranged along said rod (40), including at least a first graphic element (41a) associated with an underfilled recoil damping system (3), a second graphic element (41b) associated with a ready system (3) and a third graphic element (41c) associated with an overfilled system (3).

7. - The breech assembly (1) according to claim 6, **characterized in that** the graphic elements (41a-41c) are colored areas of different colors or spaced from one another.

8. - The breech assembly (1) according to any one of claims 2 to 5 or any one of claims 6 and 7 when taken in dependence on claim 2, **characterized in that** the filling port of the valve (5) is coaxial with the longitudinal axis (X1) of the recess (6) and oriented towards the opening (23).

9. - A method for checking, by an operator, the fluid level in the recoil damping system (3) of a breech assembly (1) according to one of claims 1 to 8, **characterized in that** it comprises the following steps:
- the operator positions himself at the opening (23) in the rear face (2a) of the breech ring (2);
- the operator visually detects the indicator (40) of the level gauge (4) using the viewing means (6), if applicable by reflection on the inner reflective surface (60); and
- deduce the position of the indicator (40) and therefore the underfilled, ready or overfilled state of the system (3), using a color code.

10. - The method according to claim 9, **characterized in that**, in the event that it is deduced that the system (3) is underfilled, the method further comprises a step consisting in opening the valve (5) and proceeding to fill the system (3) with fluid from the filling port until the ready state is reached.
